# EUROPÄISCHE PATENTSCHRIFT

(11) **EP 2 341 224 B1**
(45) Veröffentlichungstag und Bekanntmachung des Hinweises auf die Patenterteilung: **14.06.2017**
(21) Anmeldenummer: 10196948.3
(22) Anmeldetag: 23.12.2010
(51) Int. Cl.: F01N 3/20

(54) **Schmelztank, Heizmodul und Tanksystem**
Melting tank, heating module and tank system
Réservoir chauffé, module de chauffage et système de réservoir

(30) Priorität: 24.12.2009 DE 102009060630
(43) Veröffentlichungstag der Anmeldung: 06.07.2011
(73) Patentinhaber: DBK David + Baader GmbH, Nordring 26 76761 Rülzheim (DE)
(72) Erfinder: Dörrie, Christian, 76863 Herxheim (DE); Wildegger, Christian, 67714 Waldfischbach-Burgalben (DE); Maas, Andreas, 76877 Offenbach an der Queich (DE)
(74) Vertreter: Winter, Brandl, Fürniss, Hübner, Röss, Kaiser, Polte - Partnerschaft mbB

(56) Entgegenhaltungen:
- EP-A1- 1 473 447
- WO-A1-2004/103529
- WO-A1-2007/017080
- WO-A1-2008/138960
- DE-A1-102005 036 430
- DE-A1-102007 047 862
- DE-A1-102007 050 272

## Beschreibung

Die Erfindung betrifft einen Schmelztank gemäß dem Oberbegriff des Patentanspruches 1, sowie ein Tanksystem mit einem derartigen Schmelztank.

Bei sehr niedrigen Außentemperaturen im Minusbereich kommt es vor, dass Betriebsflüssigkeiten, wie beispielsweise eine Scheiben- oder Scheinwerferreinigungsflüssigkeit oder eine Harnstofflosung eines SCR-Katalysators einfriert und nach dem Start des Fahrzeugs für den bestimmungsgemäßen Gebrauch zunächst aufgetaut werden muss. Dies ist insbesondere kritisch bei SCR-Katalysatoren, die zur Verringerung der Stickoxid-Emissionen von Verbrennungskraftmaschinen, beispielsweise Dieselmotoren eingesetzt werden. Bei der SCR-Technologie (Selective catalytic reduction) werden die Stickoxide in einem Katalysator mit einem geeigneten Reduktionsmittel chemisch in die umwelttechnisch unbedenklichen Substanzen Stickstoff und Wasser umgesetzt. Als Reduktionsmittel wird dampf- bzw. gasförmiger Ammoniak verwendet, der aus einer wässrigen Harnstofflösung erzeugt und in den Abgasstrom eingebracht wird.

Unter dem Handelsnamen AdBlue® wird heute standardisiert eine wässrige Harnstofflösung mit einem Harnstoffgehalt von 32,5 Gewichtsprozent zur Reduzierung der Stickoxid-Emission verwendet. Auch bei diesen AdBlue®-Systemen besteht das Problem, dass die Harnstofflösung unterhalb von -11 °C gefriert und somit nicht mehr zum Katalysator gefördert werden kann.

Die Druckschrift WO 2007/017 080 A1 zeigt ein Heizsystem mit einer Tankheizung zum Auftauen von Harnstoffeis. Dabei ist die Tankheizung abschnittsweise dem Kontakt mit der Harnstofflösung ausgesetzt. Zudem ist sie im Schmelzraum, von allen Seiten zugänglich, aufgehängt.

Die Druckschrift DE 10 2005 036 430 A1 zeigt ein Heizmodul für einen Harnstofftank, das eine Umhüllung aufweist. Diese ist mit Lücken versehen, um partiell einen sehr guten Wärmeübergang zu gewährleisten.

Die Druckschrift EP 1 473 447 A1 zeigt einen Behälter für wässrige Harnstofflösung mit einer in dessen Boden und Wänden eingebetteten Heizwendel.

Um die insbesondere beim Kaltstart eines Fahrzeugs erhebliche Stickoxid-Emission zu senken, ist es erforderlich, diese Harnstofflösung schnellstmöglich aufzutauen. In der DE 20 2006 010 615 U1 der Anmelderin ist ein System vorgeschlagen, bei dem in einem großen Harnstofftank ein Schmelztank mit wesentlich kleinerem Volumen aufgenommen ist, wobei beide Tanks Harnstofflösung aufnehmen. Der Schmelztank ist mit einem leistungsstarken Heizmodul versehen, über das das verhältnismäßig kleine Harnstoffvolumen im Schmelztank beim Starten des Fahrzeugs sehr schnell aufgetaut wird, sodass der SCR-Katalysator durch Entnahme von aufgeschmolzener Harnstofflösung aus dem Schmelztank in der vorbestimmten Weise betrieben werden kann, um die Stickstoffemissionen abzusenken. Nachteilig bei dieser bekannten Lösung ist, dass der zusätzliche Schmelztank einen sehr komplexen Aufbau hat und somit entsprechend teuer ist.

Demgegenüber liegt der Erfindung die Aufgabe zugrunde, einen Schmelztank und ein mit einem derartigen Schmelztank ausgeführtes Tanksystem zu schaffen, mit dem das Aufschmelzen einer Betriebsflüssigkeit mit geringem vorrichtungstechnischen Aufwand möglich ist.

Diese Aufgabe wird im Hinblick auf den Schmelztank durch die Merkmale des Patentanspruches 1 und hinsichtlich des Tanksystems durch die Merkmale des nebengeordneten Patentanspruches 13 gelöst.

Vorteilhafte Weiterbildungen der Erfindung sind Gegenstand der Unteransprüche.

Erfindungsgemäß hat der Schmelztank einen Aufschmelzraum für eine Betriebsflüssigkeit, beispielsweise Scheibenwischwasser oder Hamstofflösung. Im Bereich des Aufschmelzraumes ist ein elektrisches Heizmodul angeordnet, um diese Betriebsflüssigkeit aufzuschmelzen. Diese wird über einen Tankeinlass dem Aufschmelzraum zugeführt und über einen Tankauslass abgezogen. Erfindungsgemäß ist das Heizmodul nicht direkt im Aufschmelzraum angeordnet, sondern in eine Hülle eingebettet und in den Behälterboden eingebettet oder eingesetzt, sodass es nicht direkt mit der Betriebsflüssigkeit kontaktiert ist und somit Heizraum und Fluidraum getrennt sind.

Auf diese Weise können die Wärmeübertragung behindernde Ablagerungen auf dem Heizmodul zuverlässig verhindert werden. Des Weiteren ermöglicht dieses Einbetten oder Einsetzen eine kostengünstige, großtechnische Montage des Heizmoduls, wobei der Aufwand zur Halterung des Heizmoduls minimal ist.

Bei einer Variante der Erfindung ist der Schmelztank in einen Haupttank eingesetzt. Im einfacheren Fall bildet der Schmelztank auch den Haupttank aus.

Als besonders gut geeignet für einen derartigen Schmelztank hat sich das erfindungsgemäße Heizmodul herausgestellt, das aus zwei vorzugsweise kammförmigen Profilkörpern besteht, die zwischen sich einen Spalt begrenzen, in den Heizelemente, vorzugsweise PTC-Widerstandselemente eingesetzt sind. Alternativ kann auch ein Profilkörper mit einer Aufnahme für die Heizelemente vorgesehen werden. Diese Heizelemente sind sowohl thermisch als auch elektrisch mit den Profilkörpern kontaktiert, sodass diese eine Doppelfunktion - Stromzuführung und Wärmeübertragung - übernehmen. Diese Bauelemente werden beim Fertigen des Schmelztanks in die oben genannte Behälterwandung eingesetzt oder eingebettet (beispielsweise umspritzt), sodass keine zusätzlichen Halterungselemente zum Lagefixieren des Heizmoduls erforderlich sind.

Das erfindungsgemäße Tanksystem besteht vorzugsweise aus einem mit einem derartigen Heizmodul ausgeführten Schmelztank.

Bei einem bevorzugten Ausführungsbeispiel der Erfindung ist das Heizmodul in einen Boden des Aufschmelzraums eingebettet und mit einer Filteraufnahme ausgeführt, durch die hindurch die Betriebsflüssigkeit vom Aufschmelzraum zum Tankauslass strömt und somit von unerwünschten Inhaltsstoffen befreit wird.

Bei einem konkreten Ausführungsbeispiel ist das Heizmodul mit einem Mittelteil ausgeführt, von dem heraus sich seitlich in Richtung zur Behälterwandung erstreckende Wärmeübertragungsrippen und eine Filteraufnahme erstrecken.

Die Filteraufnahme kann beispielsweise als eine den Filter abschnittsweise umgreifende Ringwandung ausgebildet sein, die eine radiale Einströmöffnung zum Filter hin frei lässt.

Die Lagepositionierung des Filters in einer Filteraufnahme erfolgt vorzugsweise über eine den Filter überstreckende, zu diesem eingewölbte Diagonalfeder, die im Bereich des Bodens befestigt ist und den Filter im Aufnahmeraum hält. Diese vergleichsweise flexible Lagerung des Filters hat den Vorteil, dass sich dieser beispielsweise durch den Eisdruck verursachten Druckschwankungen und Schwingungen anpassen kann, sodass dessen Beschädigung verhindert wird.

Die Diagonalfeder ist auch geeignet, Wärme durch vom Heizmodul aufgenommene Heizenergie an das Filterelement weiterzuleiten.

Bei einer Variante der Erfindung sind in einer Behälterwandung des Behälters in Bewegungsrichtung des Fahrzeugs bzw. des Tanks angeordnete Schwappöffnungen ausgebildet, durch die hindurch Betriebsflüssigkeit in den Aufschmelzraum gelangen kann. So kann selbst bei niedrigem Betriebsflüssigkeitsstand im Tanksystem beispielsweise beim Abbremsen des Fahrzeugs Flüssigkeit durch die Schwappöffnungen hindurch in das Innere des kleinen Schmelztanks gelangen, sodass dieser stets mit Betriebsflüssigkeit gefüllt ist.

Es wird bevorzugt, wenn Schwappöffnungen im Abstand zum Boden ausgebildet sind, sodass ein Minimalflüssigkeitsstand im Schmelztank vorgegeben ist.

Bei einem Ausführungsbeispiel der Erfindung sind diese Schwappöffnungen zum Mittelteil des Heizmoduls ausgerichtet.

Im Bereich des Bodens ist umfangsseitig ein ringförmiger Befestigungsflansch am Schmelztank ausgebildet, über den der Schmelztank am größeren Haupttank befestigt wird.

Bei dieser Variante wird es bevorzugt, wenn die den Aufschmelzraum begrenzende Behälterwandung sich in Axialrichtung über den Befestigungsflansch hinaus erstreckt.

Bei einem einfach aufgebauten Ausführungsbeispiel öffnet sich ein Aufnahmeraum für das Heizmodul zur Bodenunterseite hin und ist fluiddicht mittels eines Deckels verschlossen.

Der Schmelztank kann beispielsweise über geeignete Rastelemente an der Bodenunterseite des Haupttanks vorfixiert werden und dann stoffflüssig, beispielsweise durch Kleben oder Schweißen oder dergleichen lagefixiert werden. Auch ist die Fixierung des Schmelztanks an der Bodenunterseite des Haupttanks mittels Rastelemente und einer Dichtung, z.B. O-Ring oder Formdichtung möglich. Auf diese Arten ist das Heizmodul nach außen hin zuverlässig abgedichtet.

Bei einem Ausführungsbeispiel der Erfindung ist die Behälterwandung des Aufschmelzraums mit einer Einbuchtung versehen. Außerhalb dieser Einbuchtung ist dann an dem stehen bleibenden Befestigungsflansch oder an dem sich außerhalb der Behälterwandung befindlichen Teil des Bodens eine Aufnahme für einen Sensor, beispielsweise einen Temperatur- oder Eissensor ausgebildet.

Bei einem sehr kompakten Ausführungsbeispiel ist an der Filteraufnahme ein Tankauslaufstutzen ausgebildet.

Dieser Tankauslaufstutzen ist vorzugsweise beheizt. Bei einer Variante kann dieses Beheizen über ein Wärmeleitblech erfolgen, das einerseits thermisch mit dem Heizmodul kontaktiert ist und andererseits am Tankauslaufstutzen anliegt. Auch eine autarke elektrische Beheizung des Tankauslaufstutzens ist möglich.

Bei einem einfach aufgebauten Ausführungsbeispiel öffnet sich ein Aufnahmeraum für das Heizmodul zur Bodenunterseite hin und ist fluiddicht mittels eines Deckels verschlossen.

Die elektrische Kontaktierung des Heizmoduls erfolgt vorzugsweise über in den Boden des Schmelztanks eingebettete und von der Bodenunterseite zugängliche Kontakte.

Die Herstellung des Schmelztanks und die Montage des Heizmoduls ist besonders einfach, wenn der Schmelztank durch Spritzgießen hergestellt ist und das Heizmodul umspritzt wird.

Diese überraschend einfach Lösung dient auch zur Minimierung der Bauteilanzahl. Die Lagefixierung und elektrische Kontaktierung der Heizelemente, beispielsweise der PTC-Widerstandselemente kann über ein Kontaktblech erfolgen, das in den Spalt zwischen den Profilkörpern eingesetzt ist. Alternativ können zur elektrischen Kontaktierung und Lagefixierung unterschiedliche Bauteile verwendet werden.

Wie bereits oben erläutert, ist einer der Profilkörper mit einer Aufnahme für den Filter ausgeführt.

Die Anmelderin behält sich vor, auf das Zusammenwirken der drei Heizelemente (Tankheizung, Filterheizung und Tankauslassheizung) einen eigenen unabhängigen Patentanspruch zu richten.

Das gleiche gilt für die Beheizung des Tankauslasses durch Wärmekopplung zu den Profilkörpern über das genannte Kontaktblech.

Des Weiteren kann ein unabhängiger Patentanspruch auf die Filterfixierung mittels der Diagonalfeder gerichtet sein, die die Spannungsspitzen bei Eisdruck aufnehmen kann und somit eine zuverlässige Lagefixierung des Filters auch im vereisten Zustand ermöglicht.

Bevorzugte Ausführungsbeispiele der Erfindung werden im Folgenden anhand schematischer Zeichnungen näher erläutert. Es zeigen:
Figur 1 eine stark schematisierte Darstellung eines erfindungsgemäßen Tanksystems für eine wässerige Harnstofflösung eines SCR-Katalysators;
Figur 2 einen Schmelztank des Tanksystems aus Figur 1;
Figur 3 eine Draufsicht auf den Schmelztank;
Figur 4 einen Längsschnitt durch den Schmelztank; 5
Figur 5 eine Unteransicht des Schmelztanks,
Figur 6 eine Unteransicht auf den Schmelztank mit abgenommenem Deckel;
Figur 7 eine Einzeldarstellung eines Heizmoduls des erfindungsgemäßen Schmelztanks;
Figur 8 eine Variante des vorbeschriebenen Ausführungsbeispiels;
Figur 9 eine vereinfachte Ausführungsform der Erfindung, bei der der Schmelztank auch den Haupttank ausbildet;
Figur 10 ein vereinfachtes Heizmodul vor dem Umspritzen;
Figur 11 das Heizmodul nach dem Umspritzen in einem Spritzgießwerkzeug;
Figur 12 das Heizmodul gemäß Figur 11 mit eingesetzten Heizelementen und Kontakten und
Figur 13 das fertige Heizmodul mit geschlossenem Aufnahmeraum für die Heizelemente.

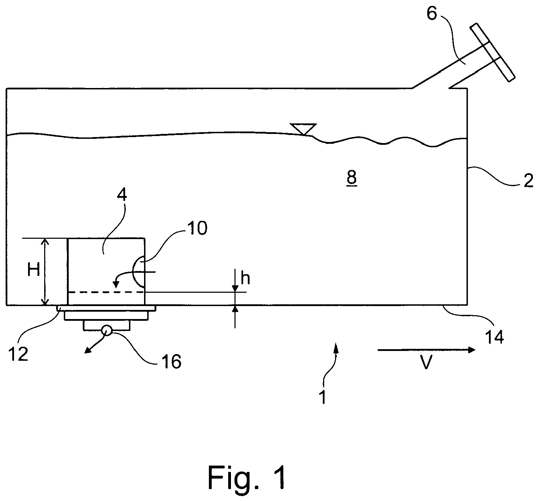

Figur 1 zeigt in stark schematisierter Form ein Tanksystem 1 eines SCR-Katalysators mit einem Haupttank 2 und einem darin aufgenommenen topfartigen Schmelztank 4. Der Haupttank 2 kann über einen Füllstutzen 6 mit einer Harnstofflösung 8 befüllt werden, deren maximaler Flüssigkeitsstand in Figur 1 angedeutet ist. Diese Harnstofflösung 8 kann bei hinreichendem Füllstand in den nach oben (Ansicht nach Figur 1) hin offenen Schmelztank 4 eintreten. Sobald der Füllstand im Haupttank 2 unterhalb der Höhe H des Schmelztanks 4 abgesunken ist, kann die Harnstofflösung über in einer Behälterwandung des Schmelztanks 4 ausgebildete Schwappöfnungen 10 in den Schmelztank 4 eintreten. Diese Schwappöffnungen 10 sind vorzugsweise in Fahrtrichtung V (siehe Pfeil in Figur 1) vorne liegend angeordnet, sodass beispielsweise bei einem Bremsvorgang durch die Massenträgheit der Harnstofflösung diese selbst dann noch in den Schmelztank eintreten kann, wenn der Flüssigkeitsstand unter das Niveau h abgesunken ist. Der Schmelztank 4 ist über einen Befestigungsflansch 12 am Tankboden 14 des Haupttanks befestigt und hat einen Tankauslass 16, durch den hindurch die aufgeschmolzene Harnstofflösung abströmen kann.

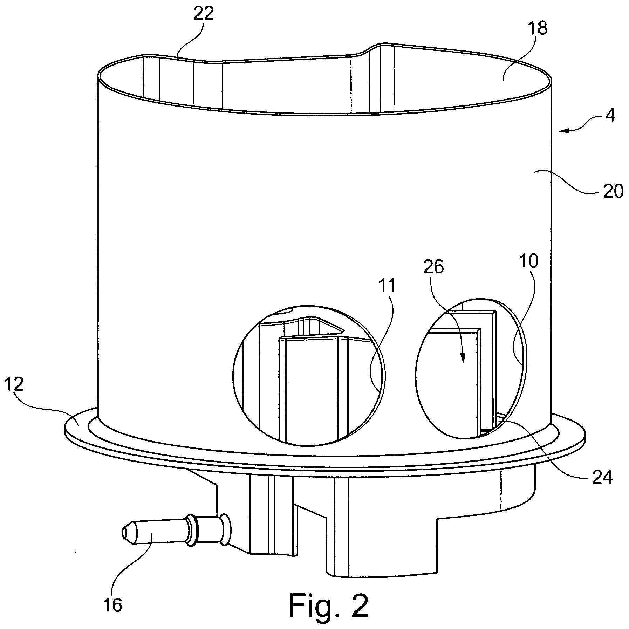

Einzelheiten des Schmelztanks 4 werden anhand der Figuren 2 bis 6 erläutert.

Figur 2 zeigt eine dreidimensionale Darstellung des nach oben offenen topfförmigen Schmelztanks 4, dessen Aufschmelzraum 18 von einer in etwa zylinderförmigen Behälterwandung 20 begrenzt ist. In dieser sind zwei etwa kreisförmige Schwappöffnungen 10, 11 ausgebildet, durch die hindurch Harnstofflösung in den Aufschmelzraum 18 gelangen kann. Wie im Folgenden noch näher erläutert wird, hat die Behälterwandung 20 rückseitig, d.h. in etwa diametral zu den Schwappöffnungen 10, 11 eine Einbuchtung 22. Der Befestigungsflansch 12 kragt in Radialrichtung aus der Behälterwandung 20 heraus und ist in etwa im Bereich eines in Figur 2 nur andeutungsweise sichtbaren Bodens 24 des Aufschmelzraums 18 ausgebildet. Die Behälterwandung 20 erstreckt sich nach unten hin über den Befestigungsflansch 12 hinaus und hat in diesem Bereich den Tankauslassstutzen 16, an den eine Harnstoffleitung des SCR-Katalysators angeschlossen ist. In den Schmelztank 4 ist ein Heizmodul 26 eingebettet, das sich in den Aufschmelzraum 18 hinein ersteckt und dessen Aufbau im Folgenden noch näher erläutert wird.

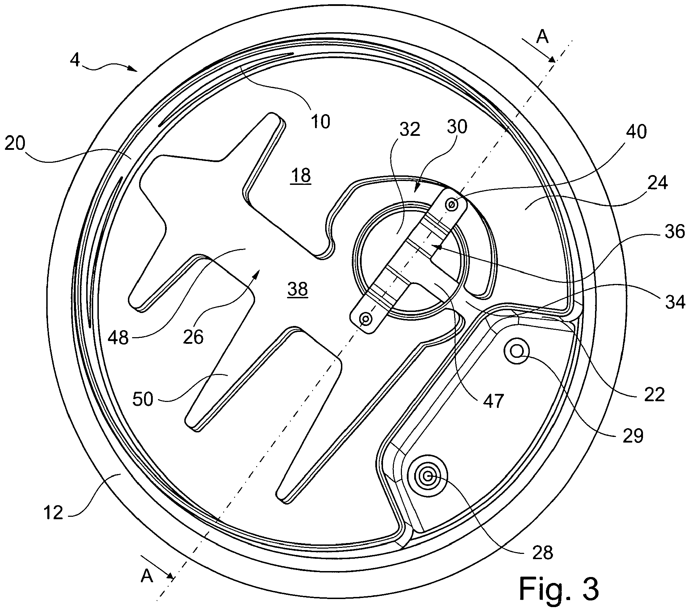

Figur 3 zeigt eine Draufsicht von oben auf den Schmelztank 4 gemäß Figur 2. Man erkennt in dieser Darstellung die den Aufschmelzraum 18 umgreifende Behälterwandung 20 mit der Einbuchtung 22 und das sich aus dem Boden 24 des Aufnahmeraums 18 zum Betrachter hin erstreckende Heizmodul 26, das in den Boden 24 eingebettet ist. Bei dem dargestellten Ausführungsbeispiel ist der Schmelztank 4 durch Spritzgießen oder einen Pressvorgang ausgebildet, wobei das Heizmodul 26 zum Aufschmelzraum 18 hin vollständig von dem Kunststoffmaterial umgeben ist. Dadurch ist eine direkte Kontaktierung zwischen Heizmodul 26 und Harnstofflösung ausgeschlossen, sodass die eingangs geschilderte Problematik einer Undichtigkeit zwischen fluidführendem Raum und Heizraum beseitigt ist.

Der Boden 24 erstreckt sich über die Einbuchtung 22 hinaus. In diesem Bereich ist eine Aufnahme 28 für einen Temperatur- oder Eissensor ausgebildet, dessen Signal zur Steuerung des Heizmoduls 26 verwendet werden kann.

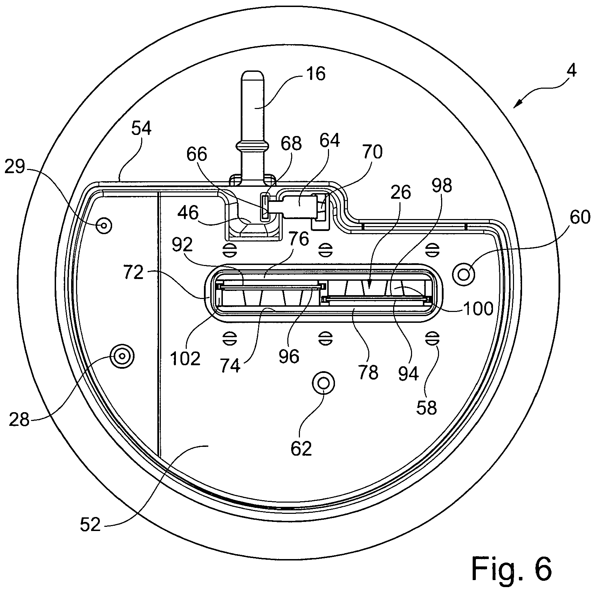

Anstelle oder zusätzlich zu diesem Temperatur-/Eissensor können selbstverständlich auch weitere Sensoren verwendet werden, um Betriebszustände des Schmelztankes zu erfassen. So kann beispielsweise ein in Figur 6 mit dem Bezugszeichen 29 versehener Füllstandssensor vorgesehen werden, über den der Füllstand im Schmelztank 4 erfasst wird.

Die Sensierung des Füllstandes kann prinzipiell akustisch, optisch, elektrisch oder thermisch erfolgen. Dabei kann das Signal stufig (voll, halbvoll, leer) oder stufenlos weiter gegeben werden. Die Auswertung erfolgt über die Elektronik auf der Platine 104. Prinzipiell können die Sensoren direkt mit der Betriebsflüssigkeit in Kontakt stehen oder aber auch außerhalb des Flüssigkeitsvolumens angeordnet sein.

Für eine berührungslose Füllstandsmessung ist es vorteilhaft, wenn dieser Füllstandssensor 29 als Ultraschallsensor ausgeführt ist. Dabei wird ein Ultraschallsignal abgegeben und von der Flüssigkeitsoberfläche reflektiert - aus der Laufzeit kann dann der Füllstand ermittelt werden. Derartige Ultraschallsensoren sind aus dem Stand der Technik, beispielsweise aus der Hydrometrie bei der Erfassung von Fluidpegeln von Gewässern bekannt, sodass weitere Erläuterungen entbehrlich sind. Im konkreten Fall ist der Füllstandssensor 29 auf die Bodenunterseite 52 aufgesetzt und sendet sein Ultraschallsignal durch die Kunststoffwandung nach oben und wird dann an der Phasengrenzfläche zwischen Flüssigkeit und umgebender Luft, d.h. am Flüssigkeitsspiegel reflektiert. Dieses System hat den Vorteil, dass der Sensor mit geringem Aufwand außerhalb des Fluidraumes angeordnet werden kann.

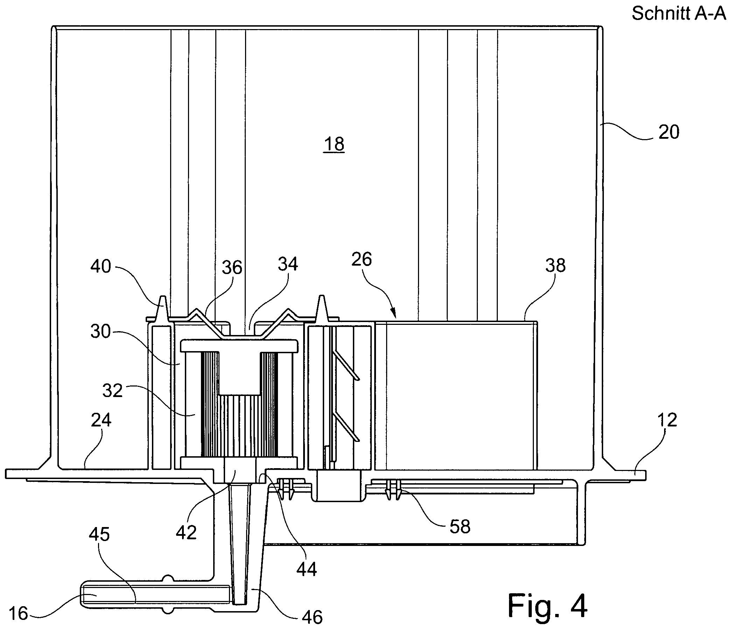

Das in den Boden 24 des Schmelztanks 4 eingebettete Heizmodul 26 erstreckt sich - wie in Figur 1 besonders gut sichtbar - in den Aufschmelzraum 18 hinein und bildet eine Filteraufnahme 30, in die ein als etwa zylinderförmige Filterpatrone ausgeführter Filter 32 eingesetzt ist. Die aufgeschmolzene Harnstofflösung strömt vom Aufschmelzraum 18 durch den Filter 32 hindurch über den Tankauslassstutzen 16 aus dem Schmelztank 4 ab und wird somit von Verunreinigungen befreit, die im Filter 32 zurückgehalten werden. Gemäß der Darstellung in Figur 3 ist die Filteraufnahme 30 in etwa ringförmig ausgebildet, wobei dieser Ring nicht vollständig geschlossen ist, sondern seitlich eine Einströmöffnung 34 offen lässt, durch die hindurch Harnstofflösung auch bei einem vergleichsweise niedrigen Füllstand zum Filter 32 strömen kann. Die axial Festlegung des Filters 32 in der Filteraufnahme 30 erfolgt über eine in der Darstellung in Figur 3 etwa T-förmige Diagonalfeder 36, die an der in Figur 3 sichtbaren Stirnfläche 38 des eingebetteten Heizmoduls 26 befestigt ist. Diese Befestigung erfolgt beispielsweise über angespritzte Dome 40, die entsprechende Ausnehmungen der Diagonalfeder 36 durchsetzen. Die Fixierung der Diagonalfeder erfolgt durch plastische Verformung der Dome 40, beispielsweise durch Ultraschall-Vernietung. Das Profil der Diagonalfeder ist besonders gut in Figur 4 sichtbar, die einen Längsschnitt im Bereich des Filters entlang der Schnittlinie A-A in Figur 3 zeigt.

Man erkennt in dieser Darstellung den in die etwa ringförmig ausgebildete Filteraufnahme 30 eingesetzten Filter 32, der über die Diagonalfeder 36 gegen den Boden 24 des Aufschmelzraums 18 gedruckt wird. Zur Zentrierung ist dabei am Filter 32 ein Vorsprung 42 ausgebildet, der in eine entsprechende Zentrieraufnahme 44 am Boden 24 eintaucht. Diese Zentrieraufnahme 44 mündet in einem Axialschenkel 46 des Tankauslassstutzens 16, dessen Endabschnitt in die Horizontale (Ansicht nach Figur 4) umgelenkt ist. Der Tankauslassstutzen kann zur Stabilisierung und Abknicksicherheit mit einer montierten oder eingespritzten Hülse 45 versehen sein. Diese Hülse kann auch zur Wärmeweiterleitung des Wämeleitblechs 64 in Richtung Tankauslass dienen.

Die Diagonalfeder 36 hat in der Ansicht gemäß Figur 4 eine etwa topfförmige, sich hin zur Stirnseite des Filters 32 einwölbende Struktur, wobei die Endabschnitte über die in Figur 4 gut sichtbaren Dome 40 auf der Stirnflache 38 des Heizmoduls 26 befestigt sind. Die plastische Verformung der Dome ist in Figur 4 nicht dargestellt. Die Einströmöffnung 34 zum radialen Einströmen der Harnstofflösung ist in der Darstellung gemäß Figur 4 lediglich abschnittsweise sichtbar.

Gemäß Figur 3 hat die Diagonalfeder 36 noch einen kurzen Radialschenkel 46, der quer zur Diagonalen der Diagonalfeder 36 verläuft und sich hin zur Einströmöffnung 34 erstreckt und somit den Filter 32 auch seitlich abstützt.

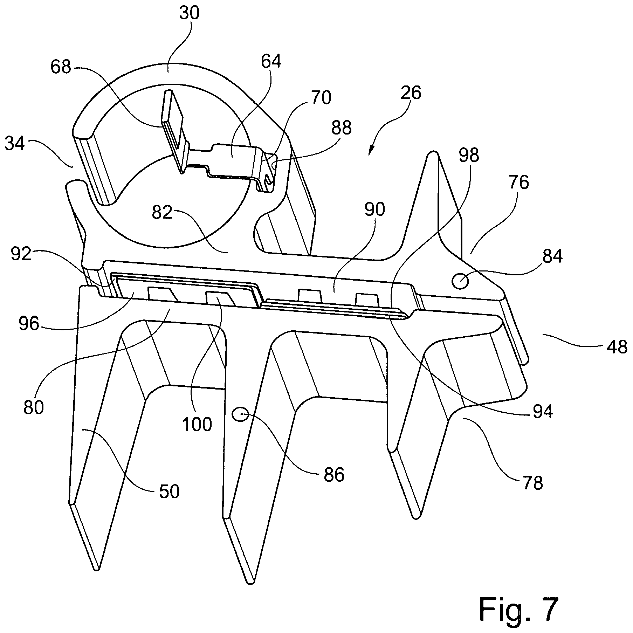

Gemäß Figur 3 hat das Heizmodul 26 in der Draufsicht ein Mittelteil 48, von dem sich beidseitig weg Wärmeübertragungsrippen 50 in Richtung zur Behälterwandung 20 erstrecken. Weitere Einzelheiten des Heizmoduls werden später anhand Figur 7 erläutert.

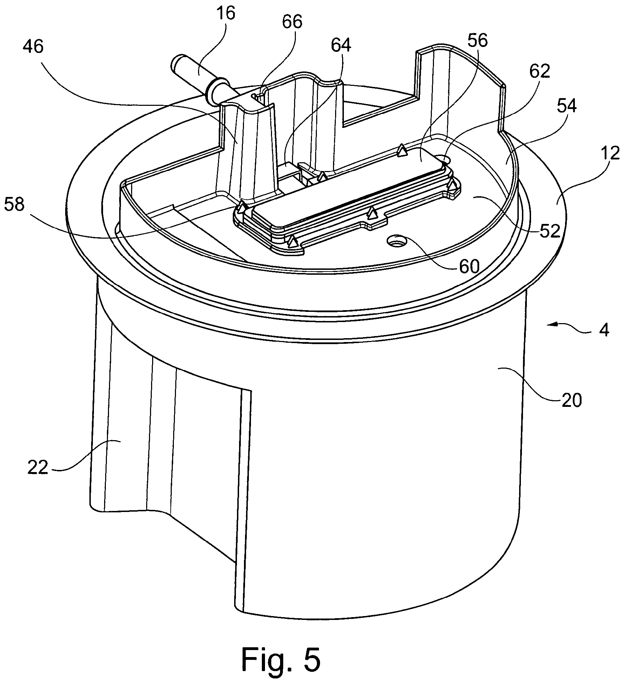

Figur 5 zeigt eine Unteransicht des Schmelztanks 4. Man erkennt die Bodenunterseite 52, die in der Darstellung gemäß Figur 1 außerhalb des Haupttanks 2 angeordnet ist. Demgemäß erstreckt sich die Behälterwandung über den Befestigungsflansch 12 hinaus und bildet im Bereich der Bodenunterseite 52 eine kreissegmentförmige Wandung 54, in die der anhand Figur 4 erläuterte Axialschenkel 46 und der Tankauslassstutzen 16 integriert sind.

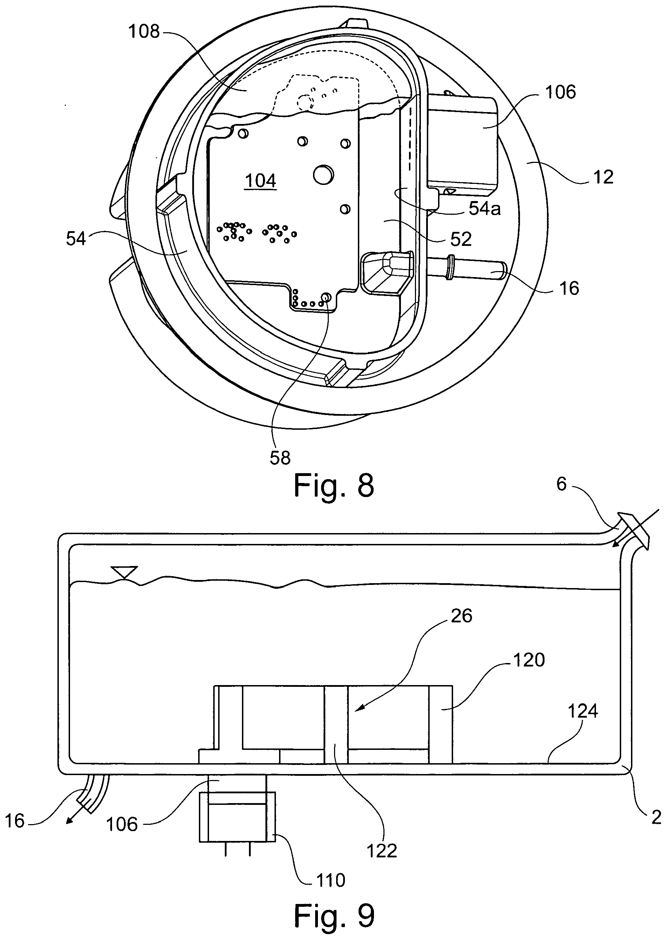

Diese Wandung 54 umgreift einen Deckel 56, der das Heizmodul 26 nach außen hin abschließt. Dieser Deckel 56 ist mit an die Bodenunterseite 52 angespritzten Federklemmen 58 vorfixiert und liegt dichtend auf der Bodenunterseite 52 auf. Diese Abdichtung kann über geeignete Dichtelemente, beispielsweise einen O-Ring oder eine Formdichtung, oder aber auch Verschweißen oder Kleben des Deckels 56 mit der Bodenunterseite 52 erfolgen. Gemäß Figur 5 sind an der Bodenunterseite 52 auch Kontakte 60, 62 zur elektrischen Kontaktierung des in den Aufnahmetank 4 eingebetteten Heizmoduls vorgesehen. Der Anschluss an die Kontakte 60,62 erfolgt beispielsweise über Ringkabelschuhe oder Pins am Heizmodul 26. Die Steuerung ist auf einer außerhalb des Aufschmelzraums 18 angeordneten Platine angeordnet, die über eine ebenfalls eingespritzte Steckerfahne kontaktiert ist. Weitere Einzelheiten zur Steuerung werden anhand Figur 8 erläutert.

Bei der dargestellten Lösung ist der Tankauslass ebenfalls beheizt. Dies erfolgt bei der gezeigten Lösung über ein Wärmeleitblech 64, das thermisch mit dem Heizmodul 26 kontaktiert ist und am Axialschenkel 46 des Tankauslasses anliegt. Hierzu ist am Axialschenkel 46 eine T-förmige Aufnahme 66 ausgebildet, in die ein Schenkel des Wärmeleitblechs 64 eintaucht und flächig am Axialschenkel 46 anliegt. Prinzipiell kann jedoch auch eine autarke elektrische Beheizung des Tankauslassstutzens vorgesehen sein.

Figur 6 zeigt eine Unteransicht auf den Schmelztank 4 bei abgenommenem Deckel. Man erkennt in dieser Darstellung das angewinkelte, Wärmeleitblech 64, das mit einem sich in Figur 6 zum Betrachter hin erstreckenden Schenkel 68 bündig in die T-förmige Aufnahme 64 des Axialschenkels 46 eingesetzt ist. Der davon entfernte Endabschnitt 70 erstreckt sich durch die Bodenunterseite 52 hindurch zum Heizmodul 26, das in der Darstellung gemäß Figur 6 abschnittsweise sichtbar ist. In dieser Ansicht sieht man auch Dichtflachen 72, die eine im Boden vorgesehene Zugriffsöffnung 74 zum Heizmodul 26 umgreifen.

Das in den Boden 24 eingespritzte Heizmodul 26 ist in Figur 7 dargestellt. Demgemäß besteht dieses aus zwei beispielsweise durch Strangpressen hergestellte Profilkörper 76, 78, die aus einem thermisch und elektrisch gut leitenden Material wie beispielsweise einer Aluminiumlegierung hergestellt sind. Die beiden Profilkörper 76, 78 haben jeweils eine Basis 80, 82, die gemeinsam das eingangs beschriebene Mittelteil 48 des Heizmoduls 26 bilden, von dem sich die Wärmeübertragungsrippen 50 nach außen erstrecken. Die elektrische Kontaktierung der Profilkörper 76, 78 erfolgt über zwei Kontaktöffnungen 84, 86, die bei diesem Ausführungsbeispiel an den Stirnflachen der Profilkörper 76, 78 ausgebildet sind. Gemäß Figur 7 ist die Filteraufnahme 30 an dem Profilkörper 76 ausgebildet. Das vorbeschriebene Wärmeleitblech 64 ist mit seinem Endabschnitt 70 in eine Öffnung 88 der Filteraufnahme 30 eingesetzt. Der Schenkel 68 ist durch eine Umfaltung seines Endabschnittes federnd ausgeführt, sodass eine zuverlässige Anlage in der Aufnahme 66 des Axialschenkels gewährleistet ist.

Die beiden Profilkörper 76, 78 begrenzen entlang der Basis 80, 82 einen sich im mittleren Bereich erweiternden Spalt 90, in dem die genannten PTC-Widerstandselemente aufgenommen sind. Bei dem dargestellten Ausführungsbeispiel sind zwei Heizelementgruppen 92, 94 vorgesehen, die jeweils aus einem oder mehreren PTC-Widerständen bestehen und die jeweils über ein Kontaktblech 96, 98 gegen einen der Profilkörper 76, 78 vorgespannt sind. Diese Kontaktbleche 96, 98 sind Stanzbiegeteile, bei denen eine Vielzahl von Federlaschen 100 aus der Großfläche herausgebogen sind. Diese Federlaschen 100 sind im Einbauzustand am jeweiligen Profilkörper 76, 78 abgestutzt, sodass die Widerstandselemente 92, 94 lagefixiert und elektrisch kontaktiert sind.

Diese Federzungen 100 der Kontaktbleche 96, 98 sind auch in der Darstellung gemäß Figur 6 sichtbar. Demgemäß sind die PTC-Widerstandselemente 92, 94 wechselseitig abgestützt, d.h. die PTC-Widerstandselemente 92 sind über das Kontaktblech 96 gegen den Profilkörper 76 vorgespannt, während die anderen PTC-Widerstandselemente 94 durch das Kontaktblech 98 gegen den Profilkörper 78 vorgespannt sind. Gemäß der Darstellung in Figur 6 erfolgt eine seitliche Lagefixierung der PTC-Widerstandselemente 92, 94 über Führungselemente 102 mit Führungsnuten, in die die Seitenkanten der PTC-Widerstandselemente 92, 94 oder diese haltende Rahmenteile eintauchen. Das mittlere Führungselement 102 ist dabei beiden PTC-Widerstandselementsgruppen zugeordnet.

Die Führungselemente werden aus einem elektrisch isolierenden Material, beispielsweise Kunststoff hergestellt.

Die Montage dieses Heizmoduls 26 ist sehr einfach, da lediglich die Profilkörper 76, 78 in das Spritzgießwerkzeug eingelegt werden müssen und dann umspritzt werden - dadurch ist eine zuverlässige Lagefixierung der genannten Bauelemente bei optimaler Dichtigkeit gewährleistet. Die PTC-Widerstandselemente / Heizelementbaugruppen 92, 94 mit den zugehörigen Fixierelementen werden nach dem Spritzgießen montiert.

Figur 8 zeigt eine Variante eines Schmelztankes 4 von der Bodenunterseite 52 her gesehen. Bei diesem Ausführungsbeispiel ist die Wandung 54 im Bereich des Tankauslasses 16 mit einem im Wesentlichen gerade verlaufenden Wandungsabschnitt 54a ausgeführt, d.h. die in Figur 6 sichtbare Stufe in diesem Wandungsbereich ist nicht vorgesehen. In der Ansicht gemäß Figur 8 ist die vorgenannte Platine 104 über die Federklemmen 58 lagefixiert und mittels eines Steckers 106 elektrisch kontaktiert, wobei diese Kontaktierung in der Ansicht gemäß Figur 8 nicht dargestellt ist. Die Platine 104 dient zur Steuerung der Heizung und der vorgenannten Sensorik, über die beispielsweise die Temperatur und/oder der Füllstand des Schmelztankes erfasst werden kann.

Beim dargestellten Ausführungsbeispiel ist dieser Stecker - genauer gesagt, dessen Gehäuse - beim Spritzgießen direkt an den Wandungsabschnitt 54a angespritzt. Beim Ausführungsbeispiel gemäß den Figuren 1 bis 7 ist dieser Stecker separat ausgeformt und nicht dargestellt.

Zur fluiddichten Abdichtung der Elektronik kann dann der von der Wandung 54 umgriffene Bereich durch eine Vergussmasse 108 abgedichtet werden, die die Platine 104 vollständig umgibt und somit nach außen hin fluiddicht abschließt. Anstelle oder zusätzlich zu diesem Verguss kann auch auf den die Elektronik aufnehmenden Bereich, d.h. auf die umlaufende Wandung 54 ein geeigneter Deckel aufgesetzt werden. Wesentlich ist, dass eine fluiddichte Trennung von dem aggressiven Adblue^{®} und der Umgebung gewährleistet ist.

Weitere Erläuterungen zum Ausführungsbeispiel gemäß Figur 8 sind nicht erforderlich, da im Übrigen weitestgehend Übereinstimmung mit dem vorbeschriebenen Ausführungsbeispiel vorliegt.

Anhand der Figuren 1 bis 8 wurden Ausführungsbeispiele eines so genannten "Topf-in-Topf"-Systems erläutert, bei dem der Schmelztank 4 in einem Haupttank 2 gemäß Figur 1 angeordnet ist.

Anhand der Figuren 9 bis 13 wird nun ein Ausführungsbeispiel erläutert, bei dem das hermetisch abgeschlossene Heizmodul 26 direkt im Haupttank 2 angeordnet ist und der Aufschmelzraum 18 somit durch dass Fassungvolumen des (Haupt-)tanks 2 gebildet ist. Ein zusätzlicher Schmelztank ist nicht mehr erforderlich. Im Folgenden wird der einzige Tank der Einfachheit "Haupttank" genannt.

Figur 9 zeigt eine der Abbildung 1 entsprechende stark vereinfachte Darstellung eines derartigen Systems mit dem Haupttank 2 und dem darin fixierten Heizmodul 26, das direkt in den Haupttank 2 eingesetzt ist. Dieser hat - ähnlich wie das Ausführungsbeispiel gemäß Figur 1 - einen Füllstutzen 6, durch den hindurch die Betriebsflüssigkeit einströmt und einen Tankauslass 16, aus dem die aufgeschmolzene Betriebsflüssigkeit abströmt.

Die Energieversorgung des vollständig von einer Hülle umgebenen Heizmoduls 26 erfolgt über einen einstückig mit dem Heizmodul 26 ausgeführten Stecker 106, an den ein mit einer Energieversorgung verbundener Gegenstecker 110 angesetzt wird.

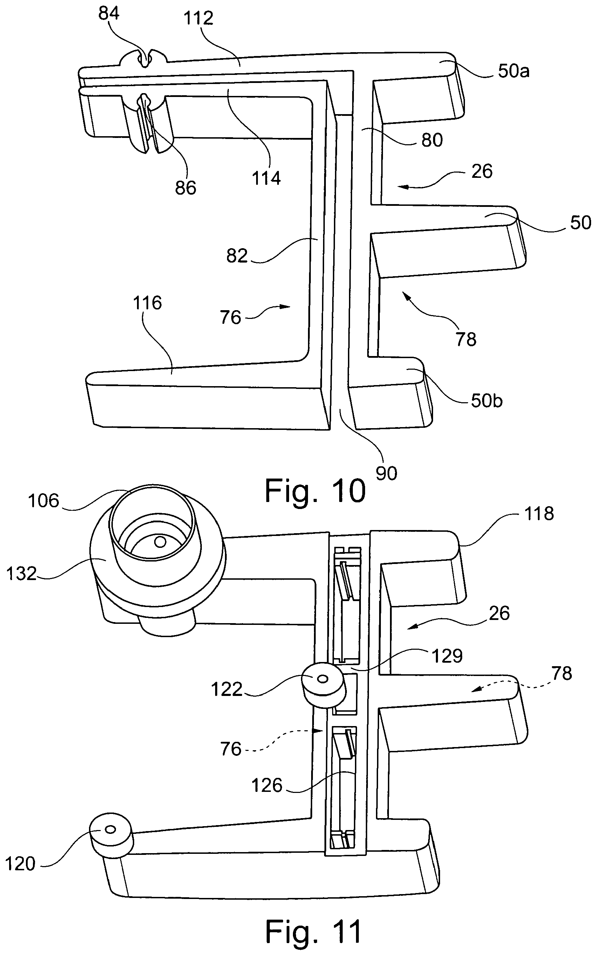

Einzelheiten dieses Heizmoduls 26 werden nunmehr anhand der Figuren 10 bis 13 erläutert.

Der Grundaufbau des Heizmoduls 26 entspricht demjenigen aus den vorbeschriebenen Ausführungsbeispielen, sodass für einander entsprechende Bauelemente die gleichen Bezugszeichen verwendet werden. Dementsprechend hat das Heizmodul 26 zwei thermisch und elektrisch leitende Profilkörper 76, 78, wobei an letzterem drei Wärmeübertragungsrippen 50, 50a, 50b ausgebildet sind. Die in Figur 10 mittlere Wärmeübertragungsrippe 50 überragt die beiden außen liegenden Wärmeübertragungsrippen 50a, 50b. Diese erstrecken sich weg von der Basis 80, wobei in Verlängerung der in Figur 10 oben liegenden Wärmeübertragungsrippe 50a ein Kontaktschenkel 112 ausgebildet ist, an dem seitlich ein zylindersegmentförmiger Vorsprung mit einer Kontaktöffnung 34 ausgebildet ist, in den in einem späteren Fertigungsschritt ein elektrischer Anschluss aufgenommen ist.

Der zweite Profilkörper 76 hat im Unterschied zum Ausführungsbeispiel gemäß Figur 7 keine Filteraufnahme 30 sondern eine etwa U-förmige Struktur mit der Basis 82, von der sich gemäß Figur 10 ein parallel zum Kontaktschenkel 112 verlaufender weiterer Kontaktschenkel 114 ausgebildet ist, der im Bereich seines Endabschnittes mit einem nach innen (weg vom Kontaktschenkel 112) vorstehenden zylindersegmentförmigen Vorsprung mit einer Kontaktöffnung 86 ausgeführt ist, die in der Darstellung gemäß Figur 10 im gleichen Abstand zur Basis 82 wie die Kontaktöffnung 84 angeordnet ist. An dem anderen Endabschnitt der Basis 82 ist eine Rippe 116 ausgebildet, die sich etwa in Verlängerung der unteren Wärmeübertragungsrippe 50b erstreckt und in etwa die gleiche Länge wie der Kontaktschenkel 114 aufweist. Zwischen den beiden Profilkörpern 76, 78 verbleibt - wie beim zuvor beschriebenen Ausführungsbeispiel - der Spalt 90, in den in einem weiteren Verfahrensschritt die eigentlichen Heizelemente eingesetzt werden.

Alternativ können die Profilkörper 76 und 78 auch einstückig ausgeführt werden. In diesem Fall werden an dem Profilkörper (hergestellt als Strangpressprofil oder als Druckgussteil) entsprechende Ausnehmungen (Aufnahmeräume) vorgesehen, in die die Heizelemente eingesetzt werden.

Die beiden Profilkörper 76, 78 bzw. der kombinierte Profilkörper werden in ein Spritzgießwerkzeug eingelegt und dann vollständig umspritzt, sodass die Harnstofflösung nicht in direkten Kontakt mit den Profilkörpern 76, 78 gelangen kann.

Diese umspritzte Profilkörperanordnung des Heizmoduls 26 ist in Figur 11 dargestellt. Man erkennt, dass die beiden Profilkörper 76, 78 nunmehr von einer Kunststoffhülle 118 umgeben sind, an die zusätzlich noch ein Steckergehäuse 106 sowie zwei Dome 120, 122 angespritzt sind. Über diese beiden Dome 120, 122 wird gemäß Figur 9 das Heizmodul 26 stoffflüssig mit einem Boden 124 des Tankes 2 verbunden. Diese Verbindung kann beispielsweise durch Spiegelschweißen erfolgen.

Im Bereich des Spaltes 90 bleibt ein etwa rechteckförmiger Aufnahmeraum 126, der je nach Bauart durch Zwischenwandungen 129 untertrennt sein kann.

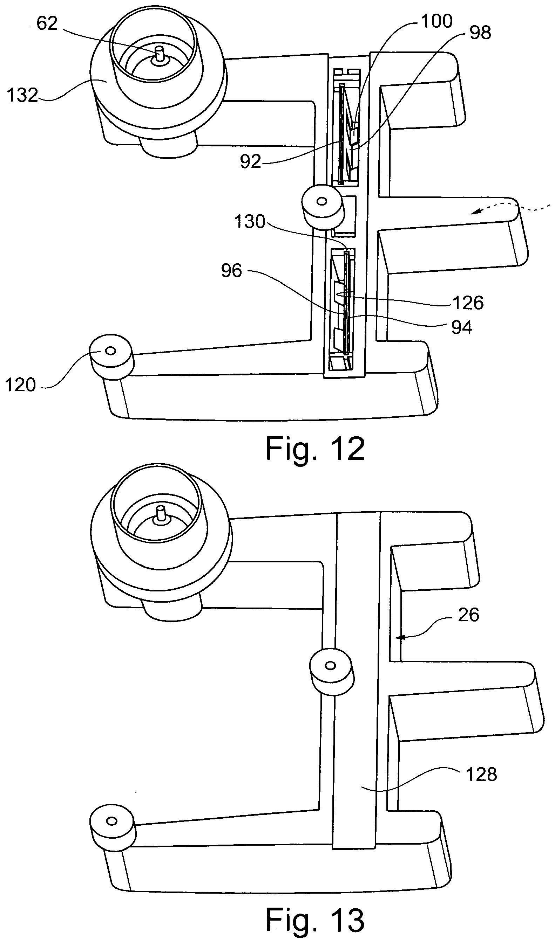

Gemäß der Darstellung in Figur 12 werden dann in diesen Aufnahmeraum 129 die eigentlichen Heizelemente, d.h. PTC-Widerstandselemente 92, 94 und die Kontaktbleche 96, 98 zum Kontaktieren und Festklemmen der PTC-Widerstandselemente eingesetzt. Beim dargestellten Ausführungsbeispiel sind die Federlaschen 100 einstückig am Kontaktblech 96, 98 ausgebildet - prinzipiell können diese jedoch auch als getrennte Bauteile ausgeführt sein, sodass die Kontaktierung über die Kontaktbleche 96, 98 und die Lagefixierung der PTC-Widerstandselemente 92, 94 über zusätzliche Federelemente erfolgt. Bei dem Ausführungsbeispiel gemäß Figur 12 sind die PTC-Widerstandselemente 94 seitlich in Nuten 130 der genannten Zwischenwandungen 129 geführt und somit lagefixiert.

In die beim Spritzgießen noch offen bleibenden Kontaktöffnungen 84, 86 werden dann Kontakte 60, 62 eingepresst, von denen in der Darstellung gemäß Figur 12 lediglich der Kontakt 62 zu sehen ist. Über diese Kontakte 62, 64 (Plus und Masse) erfolgt in Zusammenwirken mit dem angesetzten Gegenstecker 110 die Stromversorgung der PTC-Widerstandselemente.

In einem sich daran anschließenden Arbeitsgang wird dann der Aufnahmeraum 126 gemäß Figur 13 mit einem Deckel 128 abgedeckt, der beispielsweise durch Schweißen mit der Hülle 118 verbunden wird. Prinzipiell könnten die Heizelemente auch auf andere Weise, beispielsweise durch Vergießen oder dergleichen abgedichtet werden.

Weiterhin ist es möglich, dass das gesamte vormontierte Element mit einer zweiten Umspritzung aus Kunststoff versehen wird.

Durch die vorbeschriebene Fertigungsabfolge ist sichergestellt, dass die eigentlichen Heizelemente nicht in direktem Kontakt mit der aggressiven Harnstofflösung kommen können. Gemäß der Darstellung in Figur 9 ist der Stecker 106 durch den Boden 124 des Tankes 2 hindurch herausgeführt. Diese Durchführung ist in geeigneter Weise abgedichtet, sodass auch der Kontaktierungsbereich außerhalb der Harnstofflösung liegt.

Dabei liegt gemäß Figur 9 der Stecker 106 mit einem radial vorspringenden Stützflansch 132 auf dem Boden 124 auf. Die Axiallänge dieses Stützflansches 182 (siehe Figur 9) entspricht der Axiallänge der beiden Dome 120, 122, sodass eine sichere Abstützung des Heizmoduls 26 gewährleistet ist und dieses auch von unten her (Ansicht nach Figur 9) von aufzuheizender Flüssigkeit umgeben ist, sodass der Wärmeübergang optimiert ist.

Offenbart sind ein Schmelztank, ein Heizmodul und ein Tanksystem mit einem derartigen Schmelztank, die sich durch einen äußerst einfachen Aufbau auszeichnen. Dabei ist das Heizmodul in den Schmelztank fluiddicht eingebettet.

### Bezugszeichenliste

- 1: SCR-Tanksystem
- 2: Haupttank
- 4: Schmelztank
- 6: Füllstutzen
- 8: Harnstofflösung
- 10: Schwappöffnung
- 11: Schwappöffnung
- 12: Befestigungsflansch
- 14: Tankboden
- 16: Tankauslass
- 18: Aufschmelzraum
- 20: Behälterwandung
- 22: Einbuchtung
- 24: Boden
- 26: Heizmodul
- 28: Aufnahme
- 29: Füllstandssensor
- 30: Filteraufnahme
- 32: Filter
- 34: Einströmöffnung
- 36: Diagonalfeder
- 38: Stirnfläche
- 40: Dom
- 42: Vorsprung
- 44: Zentrieraufnahme
- 45: Hülse
- 46: Axialschenkel
- 47: Radialschenkel
- 48: Mittelteil
- 50: Wärmeübertragungsrippe
- 52: Bodenunterseite
- 54: Wandung
- 56: Deckel
- 58: Federklemmen
- 60: Kontakt
- 62: Kontakt
- 64: Wärmeleitblech
- 66: Aufnahme
- 68: Schenkel
- 70: Endabschnitt
- 72: Dichtflache
- 74: Zugriffsöffnung
- 76: Profilkörper
- 78: Profilkörper
- 80: Basis
- 82: Basis
- 84: Kontaktöffnung
- 86: Kontaktöffnung
- 88: Öffnung
- 90: Spalt
- 92: PTC-Widerstandselement
- 94: PTC-Widerstandseiement
- 96: Kontaktblech
- 98: Kontaktblech
- 100: Federlaschen
- 102: Führungselement
- 104: Platine
- 106: Stecker
- 108: Verguss
- 110: Gegenstecker
- 112: Kontaktschenkel
- 114: Kontaktschenkel
- 116: Rippe
- 118: Hülle
- 120: Dom
- 122: Dom
- 124: Boden
- 126: Aufnahmeraum
- 128: Deckel
- 129: Zwischenwandung
- 130: Nut
- 132: Stützflansch

## Patentansprüche

1. Schmelztank mit einem Aufschmelzraum (18) für eine Betriebsflüssigkeit, in dessen Bereich ein elektrisches Heizmodul (26) angeordnet ist, um die Betriebsflüssigkeit zumindest teilweise aufzuschmelzen, wobei das Heizmodul (26) in eine Umhüllung eingebettet ist, sodass keine direkte Kontaktierung mit der Betriebsflüssigkeit erfolgt, und der zumindest einen Tankeinlass (10) und einen Tankauslass (16) für die Betriebsflüssigkeit hat, **dadurch gekennzeichnet, dass** das Heizmodul mit zwei mit Wärmeübertagungsrippen (50) ausgeführten Profilkörpern (76, 78), die zwischen sich einen Spalt begrenzen, in den Heizelemente, vorzugsweise PTC-Widerstandselemente (92, 94), eingesetzt sind, oder mit einem mit Wärmeübertragungsrippen ausgeführten Profilkörper, der einen Aufnahmeraum hat, in den Heizelemente eingesetzt sind, ausgestaltet ist, wobei die Heizelemente mit dem Profilkörper oder den Profilkörpern (76, 78) thermisch und elektrisch kontaktiert sind, und wobei das Heizmodul (26) in einen Boden (24) eingesetzt oder eingebettet ist, so dass keine zusätzlichen Halterungselemente zum lagefixieren des Heizmoduls (26) erforderlich sind.

2. Schmelztank nach Patentanspruch 1, wobei das Heizmodul (26) eine Filteraufnahme (30) für einen Filter (32) hat, durch den hindurch Betriebsflüssigkeit vom Aufschmelzraum (18) zum Tankauslass (16) strömt.

3. Schmelztank nach einem der Patentansprüche 1 oder 2, wobei das Heizmodul (26) ein Mittelteil (48) hat, von dem aus sich seitlich in Richtung zur Behälterwandung erstreckende Wärmeübertragungsrippen (50) und ggf. die Filteraufnahme (30) erstrecken.

4. Schmelztank nach Patentanspruch 2 oder Patentanspruch 2 und 3, wobei die Filteraufnahme (30) als den Filter (32) abschnittsweise umgreifende Ringwandung ausgebildet ist, die eine radiale Einströmöffnung (34) zum Filter (32) frei lässt.

5. Schmelztank nach Patentanspruch 2 oder 4, wobei der Filter (32) über eine diesen überstreckende Feder (36) in der Filteraufnahme (30) festgelegt ist.

6. Schmelztank nach einem der vorhergehenden Patentansprüche, wobei die Behälterwandung (20) in etwa zylinderförmig ausgebildet ist und in Bewegungsrichtung des Tanks angeordnete Schwappöffnungen (10, 11) ausgebildet sind, durch die hindurch Betriebsflüssigkeit in den Aufschmelzraum (18) gelangt, wobei die Schwappöffnung (10, 11) vorzugsweise in einem Abstand (h) zum Boden (24) angeordnet ist.

7. Schmelztank nach Patentanspruch 3 oder einem der auf Patentanspruch 3 bezogenen Ansprüche, wobei das Mittelteil (48) hin zu einer Schwappöffnung (10, 11) ausgerichtet ist.

8. Schmelztank nach einem der vorhergehenden Patentansprüche, wobei ein Aufnahmeraum für das Heizmodul (26) zu einer vom Aufschmelzraum (18) abgewandten Bodenunterseite (52) hin geöffnet und mittels eines Deckels (56) fluiddicht verschlossen ist.

9. Schmelztank nach einem der vorhergehenden Patentansprüche, wobei der Tankauslass (16) über ein Kontaktblech (64) beheizt ist, das thermisch mit dem Heizmodul (26) kontaktiert ist.

10. Schmelztank nach Patentanspruch 9, wobei der Tankauslass (16) eine innen liegende wärmeleitende Hülse (45) hat, die thermisch mit dem Kontaktblech (64) kontaktiert ist.

11. Schmelztank nach einem der vorhergehenden Patentansprüche, wobei die PTC-Widerstandselemente (92, 94) über Kontaktbleche (96, 98) oder davon getrennte Federelemente gehalten sind, die in den Spalt (90) oder die Aufnahme eingesetzt sind.

12. Schmelztank nach einem der vorhergehenden Patentansprüche, wobei das Heizmodul eine fluiddichte Hülle (118) hat.

13. Tanksystem mit einem Haupttank (2), in den ein Schmelztank gemäß einem der Patentansprüche 1 bis 12 ein- oder angesetzt ist.

## Claims

1. Melting tank with a melting chamber (18) for an operating liquid with an electric heating module (26) arranged in its region to melt the operating liquid at least partially, wherein the heating module (26) is embedded in a casing in such a way that there is no direct contact with the operating liquid, and which has at least a tank inlet (10) and a tank outlet (16) for the operating liquid, **characterized in that** the heating module is formed with two profile bodies (76, 78) configured with heat transfer ribs (50) which define a gap between them into which heating elements, preferably PTC resistor elements (92, 94), are inserted, or with a profile body configured with heat transfer ribs which has a receiving space into which heating elements are inserted, wherein the heating elements are thermally and electrically in contact with the profile body or the profile bodies (76, 78), and wherein the heating module (26) is inserted or embedded in a bottom (24) so that no additional retaining elements are required for fixing the position of the heating module (26).

2. Melting tank according to patent claim 1, wherein the heating module (26) has a filter receptacle (30) for a filter (32), through which operating liquid flows from the melting chamber (18) to the tank outlet (16).

3. Melting tank according to patent claim 1 or 2, wherein the heating module (26) has a central part (48) from which heat transfer ribs (50) which laterally extend towards the container wall and possibly the filter receptacle (30) extend.

4. Melting tank according to patent claim 2 or patent claims 2 and 3, wherein the filter receptacle (30) is formed as an annular wall encompassing the filter (32) in sections, which leaves open a radial inflow opening (34) to the filter (32).

5. Melting tank according to patent claim 2 or 4, wherein the filter (32) is fixed in the filter receptacle (30) via a spring (36) extending over the filter (32).

6. Melting tank according to one of the preceding patent claims, wherein the container wall (20) has an approximately cylindrical shape and is formed with slosh openings (10, 11) arranged in the direction of movement of the tank, through which the operating liquid flows into the melting chamber (18), wherein the slosh opening (10, 11) is preferably arranged at a distance (h) to the bottom (24).

7. Melting tank according to patent claim 3 or any one of the claims dependent on patent claim 3, wherein the central part (48) is orientated towards a slosh opening (10, 11).

8. Melting tank according to one of the preceding patent claims, wherein a receiving space for the heating module (26) is opened towards a bottom lower surface (52) facing away from the melting chamber (18) and is fluid-tightly closed by means of a cover (56).

9. Melting tank according to one of the preceding claims, wherein the tank outlet (16) is heated via a contact plate (64) which is thermally in contact with the heating module (26).

10. Melting tank according to patent claim 9, wherein the tank outlet (16) has an internal heat-conducting sleeve (45) which is thermally in contact with the contact plate (64).

11. Melting tank according to one of the preceding patent claims, wherein the PTC resistor elements (92, 94) are retained via contact plates (96, 98) or spring elements separate therefrom which are inserted in the gap (90) or the receptacle.

12. Melting tank according to one of the preceding claims, wherein the heating module has a fluid-tight sheath (118).

13. Tank system with a main tank (2) in which a melting tank according to one of patent claims 1 to 12 is inserted or attached.

## Revendications

1. Réservoir de fusion avec un espace de fusion (18) pour un liquide de fonctionnement, dans l'espace duquel est disposé un module de chauffage électrique (26), pour fondre au moins partiellement le liquide de fonctionnement, le module de chauffage (26) étant inséré dans une chemise de sorte qu'aucune mise en contact direct avec le liquide de fonctionnement n'a lieu, et qui possède au moins une admission de réservoir (10) et une sortie de réservoir (16) pour le liquide de fonctionnement, **caractérisé en ce que** le module de chauffage est configuré avec deux corps profilés (76, 78) réalisés avec des nervures de transfert de chaleur (50), qui délimitent entre eux une fente, dans lesquels les éléments de chauffage, de préférence des éléments de résistance à coefficient de température positif (92, 94) sont installés, ou avec un corps profilé réalisé avec des nervures de transfert de chaleur, qui possède un espace de logement, dans lequel sont mis en place des éléments de chauffage ; dans lequel les éléments de chauffage sont mis en contact thermique et électrique avec le corps profilé ou les corps profilés (76, 78), et dans lequel le module de chauffage (26) est mis en place ou est encastré dans un fond (24), de sorte qu'aucun élément de maintien supplémentaire n'est nécessaire pour fixer en position le module de chauffage (26).

2. Réservoir de fusion selon la revendication 1, dans lequel le module de chauffage (26) possède un logement de filtre (30) pour un filtre (32), au travers duquel coule le liquide de fonctionnement de l'espace de fusion (18) à la sortie du réservoir (16).

3. Réservoir de fusion selon l'une des revendications 1 ou 2, dans lequel le module de chauffage (26) possède une partie centrale (48), à partir de laquelle s'étendent des nervures de transfert de chaleur (50), s'étendant latéralement vers la paroi de réservoir, et le cas échéant le logement de filtre (30).

4. Réservoir de fusion selon la revendication 2 ou les revendications 2 et 3, dans lequel le logement de filtre (30) est conçu comme une paroi circulaire entourant par sections le filtre (32), qui laisse libre une ouverture d'entrée radiale (34) vers le filtre (32).

5. Réservoir de fusion selon la revendication 2 ou 4, dans lequel le filtre (32) est fixé par un ressort (36), s'étendant au-dessus de lui, dans le logement de filtre (30).

6. Réservoir de fusion selon l'une des revendications précédentes, dans lequel la paroi de réservoir (20) est conçue de forme quasiment cylindrique et des ouvertures de débordement (10, 11), disposées en direction de déplacement du réservoir, sont formées, à travers lesquelles le liquide de fonctionnement parvient dans l'espace de fusion (18), l'ouverture de débordement (10, 11) étant disposée de préférence avec un écartement (h) par rapport au fond (24) .

7. Réservoir de fusion selon la revendication 3 ou l'une des revendications se rapportant à la revendication 3, dans lequel la partie centrale (48) est orientée vers une ouverture de débordement (10, 11).

8. Réservoir de fusion selon l'une des revendications précédentes, dans lequel un espace de logement pour le module de chauffage (26) est ouvert vers un côté inférieur du fond (52) opposé à l'espace de fusion (18) et est fermé de manière étanche aux fluides à l'aide d'un couvercle (56).

9. Réservoir de fusion selon l'une des revendications précédentes, dans lequel la sortie du réservoir (16) est chauffée par une tôle de contact (64), qui est mise en contact thermiquement avec le module de chauffage (26).

10. Réservoir de fusion selon la revendication 9, dans lequel la sortie de réservoir (16) possède une douille (45) conductrice de chaleur située à l'intérieur, qui est mise en contact thermiquement avec la tôle de contact (64).

11. Réservoir de fusion selon l'une des revendications précédentes, dans lequel les éléments de résistance à coefficient de température positif (92, 94) sont maintenus par des tôles de contact (96, 98) ou des éléments à ressort en étant séparés, qui sont mis en place dans la fente (90) ou le logement.

12. Réservoir de fusion selon l'une des revendications précédentes, dans lequel le module de chauffage possède une gaine (118) étanche aux fluides.

13. Système de réservoir avec un réservoir principal (2), dans lequel est mis en place ou ajusté un réservoir de fusion selon l'une des revendications 1 à 12.
